# FASCICULE DE BREVET EUROPEEN

(11) **EP 3 802 315 B1**
(45) Date de publication et mention de la délivrance du brevet: **06.07.2022**
(21) Numéro de dépôt: 19725020.2
(22) Date de dépôt: 28.05.2019
(51) Int. Cl.: B64C 1/14

(54) **PORTE D'ISSUE DE SECOURS D'UNE CABINE D'AERONEF, AVEC ASSISTANCE À L'OUVERTURE**
NOTAUSGANGSTÜR FÜR EINE FLUGZEUGKABINE MIT ÖFFNUNGSHILFSMECHANISMUS
EMERGENCY EXIT DOOR FOR AN AIRCRAFT CABIN, WITH OPENING ASSIST MECHANISM

(30) Priorité: 02.06.2018 FR 1854806
(43) Date de publication de la demande: 14.04.2021
(73) Titulaire: Latecoere, 31500 Toulouse, Occitanie (FR)
(72) Inventeur: LOUVEL, Fabien, 31280 MONS OCCITANIE (FR)
(74) Mandataire: Junca, Eric
(86) Numéro de dépôt international: PCT/EP2019/063869
(87) Numéro de publication internationale: WO 2019/229083

(56) Documents cités:
- EP-A1- 0 592 317
- EP-A1- 2 460 719
- EP-A2- 0 876 954
- FR-A1- 2 802 909
- FR-A1- 3 018 064
- US-A- 3 591 143

## Description

### DOMAINE TECHNIQUE

L'invention se rapporte au domaine de l'aéronautique et vise une porte d'issue de secours d'une cabine d'aéronef, avec assistance à l'ouverture.

Les aéronefs, et en particulier les avions, peuvent être équipés de portes d'issue de secours permettant l'évacuation des passagers et de l'équipage en cas d'urgence. Les règlementations et normes applicables à l'aéronautique rendent de plus, très couramment, ces portes d'issue de secours obligatoires. Leur conception et leur utilisation sont rigoureusement réglementées.

Les portes d'issue de secours dénommées « overwing emergency exit door », en anglais, qui sont présentes notamment dans les avions de ligne, sont un exemple de portes d'issue de secours avec assistance à l'ouverture. Ces portes d'issue de secours sont situées au dessus des ailes de l'avion et comportent un mécanisme d'ouverture/fermeture bénéficiant d'une assistance qui rend l'ouverture de la porte facile et rapide. Ces portes d'issue de secours sont destinées à fermer hermétiquement une ouverture dans le fuselage de l'avion et sont en effet, généralement, lourdes et volumineuses. Or, dans une situation d'urgence, ces portes d'issue de secours doivent pouvoir s'ouvrir avec peu d'effort de la part d'un utilisateur, quel qu'il soit, ce qui est rendu possible par des moyens d'assistance à l'ouverture de la porte.

### ÉTAT DE LA TECHNIQUE

La demande de brevet FR3018064 décrit une porte d'issue de secours située au-dessus des ailes d'un avion. Ce document décrit un procédé et un dispositif visant à obtenir, en cas d'urgence, l'ouverture de la porte le plus rapidement et le plus facilement possible. La porte s'ouvre vers l'extérieur de l'avion et vers le haut. Un mécanisme d'assistance à l'ouverture de la porte, comportant des vérins, exerce en permanence une force tendant à l'ouverture de la porte pour faciliter son mouvement vers l'extérieur et vers le haut.

La demande de brevet EP0876954 décrit un autre exemple de portes d'issue de secours avec assistance à l'ouverture, pour avion. L'ouverture de la porte est commandée par un levier actionné par un utilisateur. Des actionneurs exercent en permanence une force sur le mécanisme d'ouverture de la porte de sorte que, lorsque l'ouverture de la porte est commandée par l'utilisateur en actionnant le levier, en cas d'urgence, un faible effort est nécessaire pour que la porte s'ouvre en totalité. L'issue de secours est ainsi prête rapidement pour l'évacuation, en exigeant peu d'effort de la part de l'utilisateur qui actionne le levier.

La demande de brevet EP0592317 décrit également un exemple de porte d'issue de secours avec assistance à l'ouverture, pour avion.

Dans le domaine de l'aéronautique, et notamment s'agissant d'avions transportant des passagers, la force nécessaire pour obtenir l'ouverture d'une porte d'issue de secours doit généralement être inférieure à un maximum généralement spécifié par les avionneurs aux alentours de 120 newtons, ce qui rend impératif l'emploi de moyens d'assistance à l'ouverture de la porte d'issue de secours, compte tenu de la masse de ces portes et des forces nécessaires pour obtenir le déverrouillage des éléments de verrouillage qui maintiennent la porte contre le fuselage.

Par ailleurs, ces portes d'issue de secours ont une fonction supplémentaire. La plupart des aéronefs subissent des campagnes périodiques de maintenance au cours desquelles l'ensemble de l'aéronef est mis à dispositions des équipes de maintenance en vue d'intervenir sur les différents éléments à réviser. Durant ces opérations de maintenance, les portes d'issues de secours sont ouvertes, pour leur révision propre, et également pour que les issues correspondantes servent à l'entrée et à la sortie du matériel, ainsi que du personnel de maintenance. Durant les opérations de maintenance, un opérateur de maintenance est donc amené à commander les portes d'issue de secours en ouverture, de la même manière qu'un utilisateur serait amené à ouvrir ces portes en cas d'urgence. Le personnel de maintenance est cependant, en plus, amené à commander ces portes d'issue de secours en fermeture lorsque les opérations de maintenance sont terminées.

Or, lorsque qu'une porte d'issue de secours est commandée en ouverture, l'action est facilitée par les moyens d'assistance à l'ouverture, tandis que, lorsque la porte est commandée en fermeture, l'action est au contraire rendue plus difficile par ces mêmes moyens d'assistance à l'ouverture, qui sont actifs en permanence. Lors de la fermeture de la porte, l'utilisateur doit donc exercer une force à l'encontre des moyens d'assistance à l'ouverture. Cette force à exercer pour la fermeture de la porte est d'autant plus importante que les moyens d'assistance à l'ouverture de la porte sont puissants. Autrement dit, plus les moyens d'assistance à l'ouverture sont efficaces, plus la porte est difficile à refermer. Des moyens d'assistance à l'ouverture efficaces sont un gage de sécurité en cas d'urgence, mais sa difficulté de fermeture représente un inconvénient pour les opérations de maintenance.

La difficulté de fermeture d'une porte d'issue de secours, qui apparait donc durant les opérations de maintenance, est généralement considérée comme secondaire face à l'importance, tant réglementaire que relative à la sécurité, de garantir une ouverture de secours exigeant peu d'efforts de la part de l'utilisateur.

La performance en ouverture d'une porte d'issue de secours étant en rivalité avec une fermeture facilitée, les aéronefs de l'art antérieur mettent en œuvre un compromis consistant à dimensionner les moyens d'assistance au plus proche de la réglementation, ces moyens d'assistance à l'ouverture entrainant quand même, nécessairement, une fermeture difficile de la porte lors des opérations de maintenance.

Ce compromis, qui tend à empêcher aussi bien une grande performance en ouverture qu'une grande facilité de fermetures, présente des inconvénients majeurs. Tout d'abord, il entraine un dimensionnement des moyens d'assistance à l'ouverture selon un minimum visant à répondre aux réglementations, sans aller plus loin dans la recherche de performance en ouverture. Ensuite, ce compromis résulte souvent en une fermeture difficile de la porte d'issue de secours, les équipes de maintenance devant, pour répondre à cette difficulté, se coordonner à plusieurs personnes pour fermer une porte ou encore employer des moyens externes à l'aéronef tels que nacelles ou machines à bras articulé pour la fermeture de la porte.

### EXPOSÉ DE L'INVENTION

L'invention vise à améliorer les portes d'issue de secours d'une cabine d'aéronef, avec assistance à l'ouverture, en proposant une telle porte qui permette aussi bien une augmentation de la performance en ouverture, qu'une augmentation de sa facilité de fermeture lors les opérations de maintenance.

A cet effet, l'invention vise une porte d'issue de secours de cabine d'aéronef, cette porte comportant une assistance à l'ouverture et un dispositif d'ouverture/fermeture comportant un levier de commande actionnable, sélectivement, d'une part pour déverrouiller la porte et laisser agir l'assistance à l'ouverture de la porte, et d'autre part pour verrouiller la porte. Le levier de commande comporte un mécanisme d'adaptation de son bras de levier, ce mécanisme d'adaptation étant mobile entre au moins deux positions : une position de manœuvre d'ouverture et une position de manœuvre de fermeture, le bras de levier du levier de commande en position de manœuvre d'ouverture étant inférieur au bras de levier du levier de commande en position de manœuvre de fermeture.

Un autre objet de l'invention vise un procédé d'actionnement d'une porte d'issue de secours de cabine d'aéronef telle que décrite précédemment, ce procédé comportant les étapes suivantes :
- le levier de commande étant en configuration d'ouverture dans laquelle le mécanisme d'adaptation est en position de manœuvre d'ouverture, ouvrir la porte en actionnant le levier de commande en ouverture, et laisser agir l'assistance à l'ouverture de la porte ;
- ramener la porte contre le fuselage de l'aéronef ;
- déplacer le mécanisme d'adaptation vers sa position de manœuvre de fermeture, le levier de commande étant ainsi en configuration de fermeture ;
- verrouiller la porte en actionnant le levier de commande en fermeture.

Une telle porte comprend généralement des charnières autour desquelles elle peut pivoter, en ouverture ou en fermeture, ainsi que des moyens de verrouillage permettant de verrouiller la porte en position fermée contre le fuselage de l'aéronef. Dans la présente description ainsi que dans les revendications, le terme « ouverture » désigne une action de la porte qui comprend au moins deux opérations : une opération de déverrouillage de la porte, puis une opération de pivotement en ouverture. De même, le terme « fermeture » désigne une action de la porte qui comprend au moins deux opérations : une opération de pivotement en fermeture puis une opération de verrouillage de la porte.

Un tel dispositif d'ouverture/fermeture permet de dissocier les performances en ouverture de la capacité à permettre une fermeture avec un moindre effort. Dans sa position de manœuvre d'ouverture, le mécanisme d'adaptation permet au levier de commande une action d'ouverture requérant peu d'effort de la part de l'utilisateur, en cas d'urgence, conformément aux exigences en matière de sécurité et aux règlementations. Les moyens d'assistance à l'ouverture de la porte peuvent être dimensionnés pour une performance maximale en ouverture, c'est-à-dire pour fournir une force plus importante tendant à l'ouverture de la porte, en étant peu affectés par l'augmentation concomitante de la force à fournir par la suite pour refermer la porte, lors des opérations de maintenance. En effet, lorsque le mécanisme d'adaptation est en position de manœuvre de fermeture, il permet au levier de commande, grâce à l'augmentation du bras de levier, de fournir une force supplémentaire au dispositif de fermeture de la porte, pour un même effort de l'utilisateur.

En utilisation normale de l'aéronef, le mécanisme d'adaptation peut être maintenu en position de manœuvre d'ouverture, la porte d'issue de secours étant prête pour une ouverture en cas d'urgence. Durant les opérations de maintenance, lorsqu'il est question de refermer une porte d'issue de secours qui a été ouverte, un opérateur de maintenance peut alors basculer le mécanisme d'adaptation en position de manœuvre de fermeture et bénéficier ainsi d'une augmentation du bras de levier facilitant la fermeture de la porte. De préférence, le bras de levier du levier de commande est suffisamment important, en position de manœuvre de fermeture, pour permettre la fermeture de la porte par un opérateur de maintenance seul et sans assistance de machine externe, et ce, alors que la porte a bénéficié d'une forte assistance à l'ouverture, gage de sécurité en cas d'urgence.

De plus, l'invention permet de bénéficier d'un levier de commande à taille modulable, adapté d'une part à présenter un encombrement important pour le verrouillage (lorsqu'il est en position de manœuvre de fermeture), et adapté à présenter un encombrement réduit pour le déverrouillage (lorsqu'il est en position de manœuvre d'ouverture). En effet, le levier de commande, une fois la porte fermée, doit se loger derrière l'habillage de la porte et se trouve souvent au niveau de la tête du passager assis à côté de cette porte. On cherche donc à avoir un encombrement le plus réduit possible de la porte et de sa partie haute, et notamment éviter toute protubérance liée à la présence du levier de commande, pour ne pas gêner le passager.

La porte d'aéronef peut comporter les caractéristiques additionnelles suivantes, seules ou en combinaison :
- le levier de commande comporte un corps de levier et une poignée ;
- le mécanisme d'adaptation comporte un pivot permettant une rotation entre le corps de levier et la poignée, la poignée étant perpendiculaire au corps de levier lorsque le mécanisme d'adaptation est en position de manœuvre de fermeture, et la poignée étant alignée longitudinalement avec le corps de levier lorsque le mécanisme d'adaptation est en position de manœuvre de fermeture ;
- le mécanisme d'adaptation comporte un bras télescopique ;
- le mécanisme d'adaptation comporte un verrou en position de manœuvre d'ouverture ;
- la porte comporte un dispositif d'assistance à l'ouverture ;
- le dispositif d'assistance à l'ouverture comporte au moins un ressort sollicitant la porte en ouverture ;
- la porte comporte des moyens de verrouillages adaptés à déverrouiller la porte par un mouvement de descente de la porte de sorte que le dispositif d'assistance à l'ouverture inclus l'action du poids de la porte.

### PRESENTATION DES FIGURES

D'autres caractéristiques et avantages de l'invention apparaitront à la lecture de la description non limitative qui suit, en référence aux dessins annexés dans lesquels :
- la figure 1 est une vue partielle en perspective d'un aéronef montrant une porte d'issue de secours en position fermée ;
- la figure 2 représente la porte de la figure 1 en position ouverte ;
- la figure 3 représente la porte des figures 1 et 2, vue de face depuis l'intérieur de l'aéronef ;
- la figure 4 est une vue agrandie du levier de commande du dispositif d'ouverture/fermeture de la porte de la figure 3, ce levier de commande étant en configuration d'ouverture ;
- la figure 5 représente le levier de commande de la figure 4 en configuration de fermeture ;
- les figures 6 et 7 sont des vues de côté respectivement des figures 4 et 5 ;
- la figure 8 est une vue similaire à la figure 7 pour une variante de réalisation du levier de commande ;
- la figure 9 est une vue similaire à la figure 3, le levier de commande étant en configuration de fermeture.

### DESCRIPTION DÉTAILLÉE

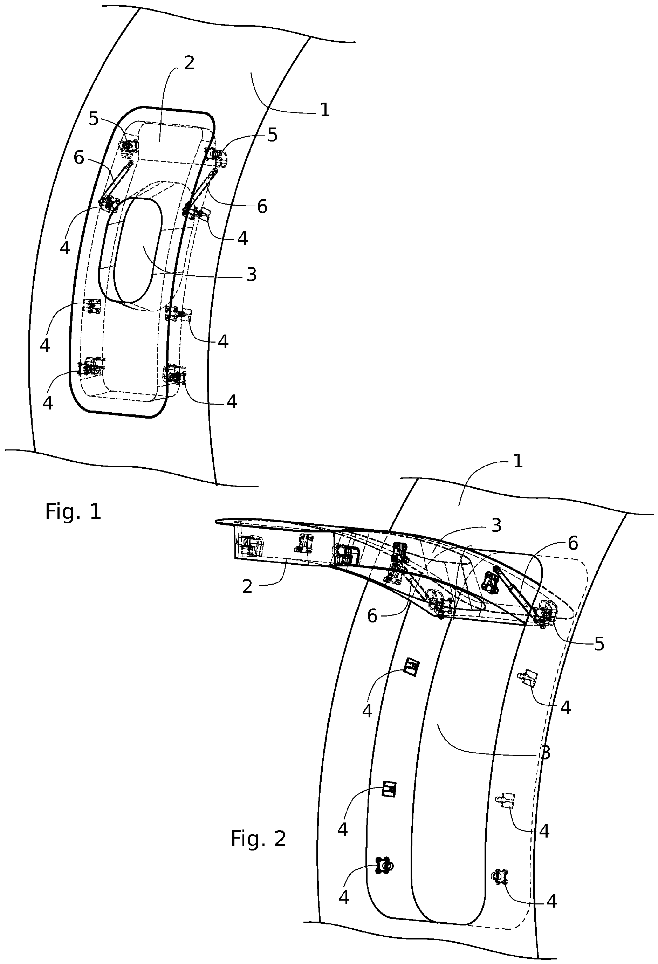

Les figures 1 et 2 illustrent le fonctionnement d'une porte d'issue de secours avec assistance à l'ouverture, d'une cabine d'aéronef. Ces figures représentent une portion du fuselage 1 de l'aéronef.

La figure 1 représente, sur cette portion de fuselage 1, une porte 2 d'issue de secours. La porte 2 comporte un dispositif d'ouverture/fermeture ainsi que, dans le présent exemple, un hublot 3.

Le dispositif d'ouverture/fermeture comporte des éléments de verrouillage 4 qui sont constitués de manière classique par des butées-porte et des contrebutées-avion fixées respectivement sur les bords latéraux de la porte 2 et sur les bords latéraux du bâti de la porte, du coté du fuselage 1.

Dans l'exemple ici décrit, la coopération des butées-porte et des contrebutées-avion est conforme à la description de la demande de brevet FR3018064. de sorte que les éléments de verrouillage 4 permettent, après le pivotement de la porte 2 en fermeture, le verrouillage de la porte 2 par un mouvement de montée de la porte par rapport au fuselage, et permettent le déverrouillage de la porte par un mouvement de descente de la porte par rapport au fuselage.

Le mécanisme d'ouverture/fermeture comporte également un dispositif de charnière 5 permettant le pivotement, en ouverture ou en fermeture, de la porte 2 par rapport au fuselage 1, et permettant la montée et la descente de la porte 2 par rapport au fuselage 1 pour permettre son verrouillage et son déverrouillage.

Le mécanise d'ouverture/fermeture comporte de plus des moyens d'assistance à l'ouverture de la porte 2. Ces moyens d'assistance à l'ouverture sont constitués, dans le présent exemple, par :
- deux vérins 6 d'assistance à l'ouverture ;
- le poids de la porte 2.

Les vérins 6 sont par exemple des vérins à gaz qui sont montés entre le fuselage 1 et la porte 2 et qui sont comprimés lorsque la porte est en position fermée, exerçant un effort permanent sur la porte 2 lorsqu'elle est en position fermée.

La position fermée, représentée à la figure 1, pour la porte 2 est la position normale de cette porte 2 dans laquelle elle ferme hermétiquement le fuselage 1, les éléments de verrouillage 4 étant verrouillés et les vérins 6 étant comprimés.

La figure 2 représente la porte 2 lorsqu'elle est en position ouverte. Cette position ouverte se rencontre soit pour l'évacuation d'urgence de l'aéronef, soit lors des opérations de maintenance. Dans cette position ouverte, la porte 2 donne accès à l'intérieur du fuselage 1, les éléments de verrouillage 4 sont déverrouillés et les vérins 6 sont en extension et maintiennent la porte 2 ouverte.

Entre la position fermée de la figure 1 et la position ouverte de la figure 2, la porte 2 subit une action d'ouverture comprenant :
- une opération de déverrouillage dans laquelle un levier est actionné depuis l'intérieur de l'aéronef de sorte que la porte effectue un mouvement de descente par rapport au fuselage, ce qui conduit au déverrouillage des éléments de verrouillage 4 ;
- une opération de pivotement en ouverture dans laquelle la porte pivote autour des ses charnières 5 et termine sa course dans la position de la figure 2.

Durant l'opération de déverrouillage, le poids de la porte 2 ainsi que la force des vérins 6 aident le mouvement. Durant l'opération de pivotement en ouverture, les vérins 6 assurent seuls le pivotement en ouverture de la porte 2 de sorte que le pivotement en ouverture de la porte 2 est réalisé automatiquement après le déverrouillage.

A l'inverse, entre la position ouverte de la figure 2 et la position fermée de la figure 1, la porte 2 subit une action de fermeture comprenant :
- une opération de pivotement en fermeture dans laquelle la porte pivote autour des ses charnières 5 et termine sa course contre le fuselage, les moyens de verrouillage 4 venant en contact les uns avec les autres ;
- une opération de verrouillage dans laquelle un levier est actionné depuis l'intérieur de l'aéronef de sorte que la porte effectue un mouvement de montée par rapport au fuselage, ce qui conduit au verrouillage des éléments de verrouillage 4.

L'opération de pivotement en fermeture se fait contre la force des vérins 6 (mais est aidée par le poids de la porte 2). L'opération de verrouillage se fait contre le poids de la porte 2 (pour remonter la porte 2 par rapport au fuselage) et contre la force des vérins 6.

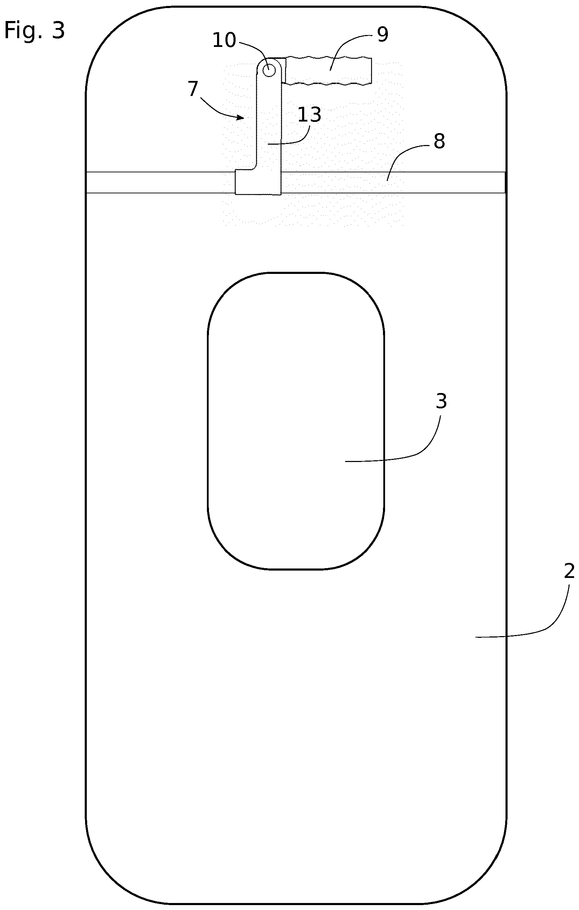

La figure 3 montre la porte 2 vue depuis l'intérieur de l'aéronef lorsqu'elle est en position fermée. La porte 2 se présente ainsi à un utilisateur qui s'apprête à l'ouvrir. Le dispositif d'ouverture/fermeture de la porte 2 comporte, comme interface pour l'utilisateur, un levier de commande 7 qui est actionnable pour déverrouiller la porte et libérer l'assistance à l'ouverture procurée par les vérins 6 et le poids de la porte.

Le levier de commande 7 est monté sur un arbre 8 qui pivote autour de son axe longitudinal. L'arbre 8 permet, lorsque son pivotement est commandé par le levier de commande 7, d'abaisser la porte 2 par rapport au fuselage et de déverrouiller les éléments de verrouillage 4 grâce à un mécanisme classique (non représenté) interne à la porte 2. Le levier de commande 7 comporte une poignée 9 qui est disposée, dans le présent exemple, parallèlement à l'arbre 8.

Pour un utilisateur placé face à la porte 2 et qui souhaiterait ouvrir cette dernière, l'action consiste simplement à prendre la poignée 9 en main et à la tirer vers soi. L'utilisateur devra fournir, en tout début de manœuvre, une force relativement faible pour initier le déverrouillage des éléments de verrouillage 4. Le poids de la porte 2 et la force exercée par les vérins 6 s'ajoutent à la force exercée par l'utilisateur et assiste celui-ci dans la manœuvre. Une fois les éléments de verrouillage 4 déverrouillés, les vérins 6 d'assistance à l'ouverture poursuivent à eux seuls le pivotement en ouverture de la porte 2 jusqu'à son ouverture complète, cette fois-ci sans aucune force nécessaire de la part de l'utilisateur.

Le levier de commande 7 comporte de plus un mécanisme d'adaptation 10 qui est mobile entre une position de manœuvre d'ouverture et une position de manœuvre de fermeture. Lorsque le mécanisme d'adaptation 10 est en position de manœuvre d'ouverture, le levier de commande 7 est en configuration d'ouverture. Lorsque le mécanisme d'adaptation 10 est en position de manœuvre de fermeture, le levier de commande 7 est en configuration de fermeture.

Sur la figure 3, le mécanisme d'adaptation 10 est en position de manœuvre d'ouverture et le levier de commande 7 est donc en configuration d'ouverture. En fonctionnement normal, la porte 2 est fermée, les éléments de verrouillage 4 étant verrouillés, et le levier de commande 7 est en position de manœuvre d'ouverture prêt à être actionné pour l'ouverture en cas d'urgence.

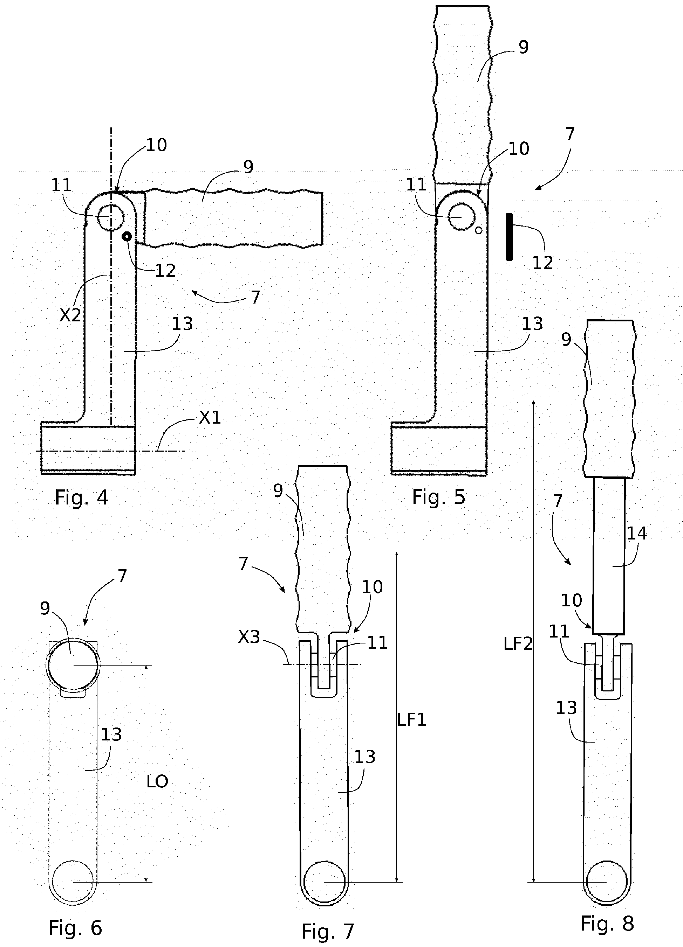

Les figures 4 à 7 représentent le levier de commande 7 dans ses deux configurations d'ouverture et de fermeture.

La figure 4 représente le levier de commande 7 en configuration d'ouverture, dans sa position de la figure 3, c'est-à-dire dans la position telle qu'il est accessible par un utilisateur. Le levier de commande 7 comporte un corps 13 sur lequel est monté la poignée 9 par l'intermédiaire du mécanisme d'adaptation 10.

Le mécanisme d'adaptation 10 comporte, dans le présent exemple, un pivot 11 dont l'axe de rotation X3 est perpendiculaire à l'axe de rotation X1 du corps 13 et perpendiculaire à l'axe longitudinal X2 dans lequel s'étend le corps 13. Le mécanisme d'adaptation 10 comporte également un verrou constitué ici d'une goupille 12 qui, lorsqu'elle est en place, traverse des orifices pratiqués dans le levier de commande 7 et dans la poignée 9 de sorte à verrouiller la position de la poignée 9 par rapport au levier de commande 7 dans la position de la figure 4, c'est-à-dire dans la position où la poignée 9 est perpendiculaire au corps 13.

La figure 5 représente le levier de commande 7 en configuration de fermeture, c'est-à-dire lorsque le mécanisme d'adaptation 10 est en position de manœuvre de fermeture. Dans cette configuration, la goupille 12 a été ôtée, libérant ainsi la rotation de la poignée 9 par rapport au levier de commande 7, et la poignée 9 a été pivotée de 90° autour du pivot 11. Dans cette configuration d'ouverture, la poignée 9 est sensiblement dans le prolongement du levier de commande 7. Optionnellement, la goupille 12 peut être repositionnée pour verrouiller la poignée 9 dans sa position de la figure 5.

Les figures 6 et 7 sont des vues de droite, respectivement, des figures 4 et 5 et permettent de comparer les bras de levier du levier de commande 7, en fonction de sa configuration d'ouverture ou de fermeture.

Sur la figure 6, le bras de levier LO du levier de commande 7 en configuration d'ouverture présente une longueur s'étendant entre l'axe X1 et l'axe X3.

Sur la figure 7, le bras de levier LF1 du levier de commande 7 en configuration de fermeture présente une longueur s'étendant entre l'axe X1 et le milieu de la poignée 9. On considère dans cet exemple que, lorsqu'un utilisateur saisit la poignée 9 avec sa main, il exerce une force dont l'intensité est positionnée sensiblement à mi- longueur de la poignée 9.

La figure 8 illustre une variante selon laquelle le mécanisme d'adaptation 10 comporte de plus un bras télescopique 14 sur lequel est montée la poignée 9 de sorte que cette dernière puisse se translater en s'éloignant du pivot 11. Selon cette variante, le mécanisme 10, en plus de permettre la rotation de la poignée 9, lui permet d'être télescopique, ce qui permet d'obtenir un bras de levier LF2 encore supérieur pour la configuration de fermeture.

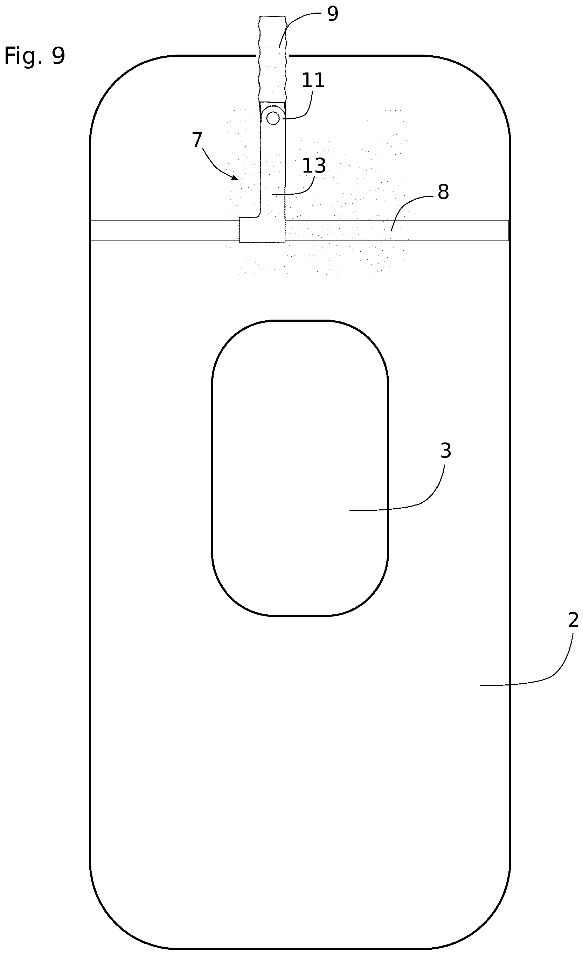

La figure 9 représente la porte 2, dans une position similaire à celle de la figure 3, le levier de commande 7 étant cette fois-ci en configuration de fermeture.

La figure 9 représente une configuration qui a lieu durant les opérations de maintenance de l'aéronef. Après que la porte 2 ait été ouverte pour les besoins de la maintenance, elle est ensuite refermée par un opérateur qui d'abord agit manuellement sur porte 2 pour la pivoter en fermeture, de sa position ouverte (figure 2) à une position où la porte 2 est ramenée contre le fuselage de l'aéronef, les éléments de verrouillage 4 n'étant pas encore verrouillés. L'opérateur actionne ensuite le mécanisme d'adaptation 10 vers sa position de manœuvre de fermeture en extrayant la goupille 12 et en pivotant la poignée 9 autour du pivot 11 pour placer le levier de commande 7 en configuration de fermeture. Dans cette configuration de fermeture, l'opérateur actionne le levier de commande 7 en fermeture, c'est à dire ici en le poussant vers le haut, et ce jusqu'à verrouiller les éléments de verrouillage 4 grâce à la rotation de l'arbre pivotant 8. Durant toute cette action de verrouillage l'opérateur exerce une force à l'encontre des moyens d'assistance à l'ouverture constitués des vérins 6 et du poids de la porte 2.

Dans le présent exemple, la configuration de fermeture du levier de commande 7 présente un bras de levier LF1 de 50 % supérieur au bras de levier LO de sa configuration d'ouverture. La force que l'utilisateur doit fournir pour l'opération de verrouillage est donc réduite à 2/3 de la force nécessaire sans l'utilisation du mécanisme d'adaptation 10.

Selon la variante de la figure 8, le bras de levier LF2 de la configuration de fermeture est le double du bras de levier LO de la configuration d'ouverture. La force que l'utilisateur doit fournir pour l'opération de verrouillage est donc réduite à la moitié de la force nécessaire sans l'utilisation du mécanisme d'adaptation 10.

La force à exercer par l'utilisateur pour verrouiller la porte 2 étant réduite à volonté (en fonction du dimensionnement bras de levier), les vérins 6 peuvent être dimensionnés pour exercer une assistance à l'ouverture augmentée d'autant.

D'autres variantes de réalisation du dispositif d'ouverture/fermeture d'une porte d'issue de secours avec assistance à l'ouverture peuvent être mises en œuvre sans sortir du cadre de l'invention. Par exemple, l'aéronef peut être tout engin volant apte à transporter des passagers.

Le mécanisme d'adaptation peut comporter des positions intermédiaires, entre ses positions de manœuvre d'ouverture et de manœuvre de fermeture décrites ici. Le verrou du mécanisme d'adaptation peut être réalisé par tout moyen, autre qu'une goupille, permettant de bloquer le levier de commande 7 en configuration d'ouverture et éventuellement en configuration de fermeture.

Le mécanisme d'adaptation peut également être réalisé par tous moyens permettant d'augmenter le bras de levier du levier de commande. Le corps 13 du levier de commande 7 peut par exemple être télescopique.

L'assistance à l'ouverture de la porte d'issue de secours peut aussi être réalisée par d'autres moyens que les vérins d'assistance 6 et le poids de la porte 2 décrits ici. Par exemple, les moyens d'assistance à l'ouverture peuvent être constitués du poids de porte 2 seul, ou des vérins 6 seuls. Ces vérins sont un type particulier de ressort et tout type de ressort (à spirale, de torsion, ou autre) peut être employé pour exercer un effort tendant à l'ouverture de la porte, de même que d'autres moyens pour exercer une force d'assistance.

L'utilisation du poids de la porte, c'est à dire de la force à laquelle est soumise la porte en raison de la pesanteur, comme moyen d'assistance à l'ouverture de la porte peut être mis en ouvre avec un dispositif de charnière différent, par exemple un dispositif de charnière 5 permettant une ouverture de la porte vers le bas, en basculement.

## Revendications

1. Porte (2) d'issue de secours de cabine d'aéronef, cette porte comportant une assistance à l'ouverture et un dispositif d'ouverture/fermeture comportant un levier de commande (7) actionnable, sélectivement, d'une part pour déverrouiller la porte (2) et laisser agir l'assistance à l'ouverture de la porte (2), et d'autre part pour verrouiller la porte (2), cette porte étant **caractérisée en ce que** le levier de commande (7) comporte un mécanisme d'adaptation (10) de son bras de levier, ce mécanisme d'adaptation (10) étant mobile entre au moins deux positions : une position de manœuvre d'ouverture et une position de manœuvre de fermeture, le bras de levier (LO) du levier de commande (7) en position de manœuvre d'ouverture étant inférieur au bras de levier (LF1, LF2) du levier de commande (7) en position de manœuvre de fermeture.

2. Porte selon la revendication 1, **caractérisée en ce que** le levier de commande (7) comporte un corps de levier (13) et une poignée (9).

3. Porte selon la revendication 2, **caractérisée en ce que** le mécanisme d'adaptation (10) comporte un pivot (11) permettant une rotation entre le corps de levier (13) et la poignée (9), la poignée (9) étant perpendiculaire au corps de levier (13) lorsque le mécanisme d'adaptation (10) est en position de manœuvre de fermeture, et la poignée (9) étant alignée longitudinalement avec le corps de levier (13) lorsque le mécanisme d'adaptation (10) est en position de manœuvre de fermeture.

4. Porte selon l'une quelconque des revendications précédentes, **caractérisée en ce que** le mécanisme d'adaptation (10) comporte un bras télescopique (14).

5. Porte selon l'une quelconque des revendications précédentes, **caractérisée en ce que** le mécanisme d'adaptation (10) comporte un verrou (12) en position de manœuvre d'ouverture.

6. Porte selon l'une quelconque des revendications précédentes, **caractérisée en ce qu'**elle comporte un dispositif d'assistance (6) à l'ouverture.

7. Porte selon la revendication 6, **caractérisé en ce que** le dispositif d'assistance à l'ouverture comporte au moins un ressort (6) sollicitant la porte (2) en ouverture.

8. Porte selon l'une quelconque des revendications 6 et 7, **caractérisé en ce qu'**elle comporte des moyens de verrouillages (4) adaptés à déverrouiller la porte (2) par un mouvement de descente de la porte (2) de sorte que le dispositif d'assistance à l'ouverture inclus l'action du poids de la porte (2).

9. Procédé d'actionnement d'une porte d'issue de secours de cabine d'aéronef conforme aux revendications 1 à 8, ce procédé comportant les étapes suivantes :
- le levier de commande (7) étant en configuration d'ouverture dans laquelle le mécanisme d'adaptation (10) est en position de manœuvre d'ouverture, ouvrir la porte (2) en actionnant le levier de commande (7) en ouverture, et laisser agir l'assistance à l'ouverture de la porte ;
- ramener la porte (2) contre le fuselage (7) de l'aéronef ;
- déplacer le mécanisme d'adaptation (10) vers sa position de manœuvre de fermeture, le levier de commande (7) étant ainsi en configuration de fermeture ;
- verrouiller la porte (2) en actionnant le levier de commande (7) en fermeture.

## Patentansprüche

1. Notausstiegstür (2) einer Luftfahrzeugkabine, wobei diese Tür eine Öffnungshilfe und eine Öffnungs-/Schließvorrichtung aufweist, die einen Steuerhebel (7) aufweist, der gezielt dazu betätigbar ist, einerseits die Tür (2) zu entriegeln und die Hilfe zum Öffnen der Tür (2) tätig werden zu lassen und andererseits die Tür (2) zu verriegeln, wobei diese Tür **dadurch gekennzeichnet ist, dass** der Steuerhebel (7) einen Mechanismus (10) zur Adaptierung seines Hebelarms aufweist, wobei dieser Adaptierungsmechanismus (10) zwischen mindestens zwei Positionen beweglich ist: einer Öffnungsbewegungsposition und einer Schließbewegungsposition, wobei der Hebelarm (LO) des Steuerhebels (7) in der Öffnungsbewegungsposition unter dem Hebelarm (LF1, LF2) des Steuerhebels (7) in der Schließbewegungsposition liegt.

2. Tür nach Anspruch 1, **dadurch gekennzeichnet, dass** der Steuerhebel (7) einen Hebelkörper (13) und einen Griff (9) aufweist.

3. Tür nach Anspruch 2, **dadurch gekennzeichnet, dass** der Adaptierungsmechanismus (10) einen Gelenkzapfen (11) aufweist, der eine Drehung zwischen dem Hebelkörper (13) und dem Griff (9) gestattet, wobei der Griff (9) senkrecht zu dem Hebelkörper (13) verläuft, wenn der Adaptierungsmechanismus (10) in der Schließbewegungsposition ist, und der Griff (9) in Längsrichtung auf den Hebelkörper (13) ausgerichtet ist, wenn der Adaptierungsmechanismus (10) in der Schließbewegungsposition ist.

4. Tür nach einem der vorhergehenden Ansprüche, **dadurch gekennzeichnet, dass** der Adaptierungsmechanismus (10) einen zusammenschiebbaren Arm (14) aufweist.

5. Tür nach einem der vorhergehenden Ansprüche, **dadurch gekennzeichnet, dass** der Adaptierungsmechanismus (10) einen Riegel (12) in der Öffnungsbewegungsposition aufweist.

6. Tür nach einem der vorhergehenden Ansprüche, **dadurch gekennzeichnet, dass** sie eine Öffnungshilfsvorrichtung (6) aufweist.

7. Tür nach Anspruch 6, **dadurch gekennzeichnet, dass** die Öffnungshilfsvorrichtung mindestens eine Feder (6) aufweist, die die Tür (2) zum Öffnen beaufschlagt.

8. Tür nach einem der Ansprüche 6 und 7, **dadurch gekennzeichnet, dass** sie Verriegelungsmittel (4) aufweist, die dazu ausgeführt sind, die Tür (2) durch eine Niedergangsbewegung der Tür (2) zu entriegeln, so dass in der Öffnungshilfsvorrichtung die Wirkung des Gewichts der Tür (2) mit einbegriffen ist.

9. Verfahren zur Betätigung einer Notausstiegstür einer Luftfahrzeugkabine nach Ansprüchen 1 bis 8, wobei dieses Verfahren folgende Schritte aufweist:
- Öffnen der Tür (2), wenn der Steuerhebel (7) in der Öffnungskonfiguration ist, in der der Adaptierungsmechanismus (10) in der Öffnungsbewegungsposition ist, indem man den Steuerhebel (7) zum Öffnen betätigt und die Hilfe zum Öffnen der Tür tätig werden lässt,
- Ziehen der Tür (2) gegen den Rumpf (7) des Luftfahrzeugs,
- Bewegen des Adaptierungsmechanismus (10) zu seiner Schließbewegungsposition hin, wobei der Steuerhebel (7) somit in der Schließkonfiguration ist,
- Verriegeln der Tür (2), indem man den Steuerhebel (7) zum Schließen betätigt.

## Claims

1. An emergency exit door (2) for an aircraft cabin with an opening-assist mechanism and an opening/closing device comprising a control lever (7) that can be operated selectively firstly to unlock the door (2) and to enable the opening-assist mechanism of the door (2) to operate, and secondly to lock the door (2), this door being **characterized in that** the control lever (7) includes an adaptation mechanism (10) for the lever arm thereof, this adaptation mechanism (10) being moveable between at least two positions: an opening-action position and a closing-action position, the lever arm (LO) of the control lever (7) in the opening-action position being shorter than the lever arm (LF1, LF2) of the control lever (7) in the closing-action position.

2. The door as claimed in claim 1, **characterized in that** the control lever (7) includes a lever body (13) and a handle (9).

3. The door as claimed in claim 2, **characterized in that** the adaptation mechanism (10) includes a pivot (11) enabling a rotation between the lever body (13) and the handle (9), the handle (9) being perpendicular to the lever body (13) when the adaptation mechanism (10) is in the closing-action position, and the handle (9) being aligned longitudinally with the lever body (13) when the adaptation mechanism (10) is in the closing-action position.

4. The door as claimed in any one of the preceding claims, **characterized in that** the adaptation mechanism (10) includes a telescopic arm (14).

5. The door as claimed in any one of the preceding claims, **characterized in that** the adaptation mechanism (10) includes an opening-action position bolt (12).

6. The door as claimed in any one of the preceding claims, **characterized in that** it includes an opening-assist device (6).

7. The door as claimed in claim 6, **characterized in that** the opening-assist device has at least one spring (6) pressing the door (2) open.

8. The door as claimed in either one of claims 6 and 7, **characterized in that** it includes locking means (4) designed to unlock the door (2) by means of a downward movement of the door (2) such that the opening-assist device includes the action of the weight of the door (2).

9. A method for actuating an emergency exit door for an aircraft cabin as claimed in claims 1 to 8, in which said method includes the following steps:
- with the control lever (7) in opening mode in which the adaptation mechanism (10) is in the opening-action position, opening the door (2) by opening the control lever (7) and allowing the opening-assist mechanism of the door to operate,
- moving the door (2) against the fuselage (7) of the aircraft,
- moving the adaptation mechanism (10) to the closing-action position, thereby placing the control lever (7) in closing mode,
- locking the door (2) by closing the control lever (7).
